# EUROPEAN PATENT SPECIFICATION

(11) **EP 3 955 847 B1**
(45) Date of publication and mention of the grant of the patent: **27.11.2024**
(21) Application number: 20790455.8
(22) Date of filing: 31.03.2020
(51) Int. Cl.: A61C 8/00, A61C 13/225

(54) **DENTAL ABUTMENT ASSEMBLY**
ZAHNPFOSTEN-ZUSAMMENSTELLUNG
ASSEMBLAGE DE PILIER DENTAIRE

(30) Priority: 14.04.2019 IL 26602119
(43) Date of publication of application: 23.02.2022
(73) Proprietor: Mikambeh Ltd, Ramat Hasharon (IL); SFM Ltd, Hod Hasharon (IL)
(72) Inventor: BERGER, Uzi, Hod Hasharon (IL)
(74) Representative: Dall'Olio, Christian
(86) International application number: PCT/IL2020/050388
(87) International publication number: WO 2020/212968

(56) References cited:
- WO-A1-2018/060194
- WO-A1-2018/060194
- FR-A1- 2 635 455
- KR-B1- 101 881 421
- US-A- 5 069 622
- US-A- 5 135 395
- US-A1- 2003 224 328
- US-A1- 2015 118 651
- US-A1- 2017 224 447
- US-A1- 2017 224 447
- US-B2- 9 668 833

## Description

### TECHNOLOGICAL FIELD

The present disclosure is generally concerned with dental prosthetics and more particularly with an adjustable abutment system, an abutment therefor, and a method for fixing a dental prosthesis using such an abutment.

### BACKGROUND ART

References considered to be relevant as background to the presently disclosed subject matter are listed below:
- US9,668,833
- KR101768410
- US6,227,860
- US9,603,679
- WO16139671
- KR101881421 B1

Acknowledgement of the above references herein is not to be inferred as meaning that these are in any way relevant to the patentability of the presently disclosed subject matter.

### BACKGROUND

US9,668,833 discloses an abutment, comprising: a ceramic part; and a metal adapter removably attachable to the ceramic part, wherein the metal adapter has a conical connection interface adapted to attach to a dental implant, wherein the metal adapter comprises at least one flexible arm with a protrusion adapted to press against a side wall or snap into any corresponding recess of the ceramic part to secure the metal adapter to the ceramic part in the coronal-apical direction, wherein the metal adapter comprises at least one convex surface adapted to abut against at least one corresponding concave surface of the ceramic part to prevent rotation between the ceramic part and the metal adapter, wherein the metal adapter at its coronal end has a central protruding portion which is adapted to be received in a central apical recess of the ceramic part, and wherein said central protruding portion accommodates said at least one convex surface and said at least one flexible arm is housed within said central protruding portion

KR101768410 discloses a detachable locking link capable of compensating an upper prosthesis which, when a compensation of an upper prosthesis is required, is allowed to compensate the upper prosthesis on the basis of a structural characteristic which is easily detachably attached from the upper prosthesis, and is easily used and disassembled and assembled again during in use, and a method for assembling an upper prosthesis using the same. The detachable locking link comprises: a coupling unit which is interposed by an upper prosthesis; an implant unit which is interposed by an implant; and an extension blade unit which is extended to the side direction at a border of the implant unit and the coupling unit. Accordingly, the locking link induces an implant and the upper prosthesis to be mutually coupled with each other. The coupling unit is coupled by being forcibly inserted into the inside of an insertion hole of the upper prosthesis, wherein an upper end divided as two or more places is frictionally inserted and interposed with the insertion hole of the upper prosthesis.

US6,227,860 discloses a dental implant that includes a cylindrical body which can be positively secured against micromotion within a bore in a jawbone by a spindle-shaped expansion mechanism and further secured against the contamination by microorganism through a gap in an internal channel of tubular portion by a compressive contact mechanism

US9,603,679 discloses a root canal abutment devices and methods which facilitate the adjustment or removal of an oral appliance, e.g., a crown or bridge, from a reconfigurable abutment assembly are described. The adjustable abutment assembly may be secured within a pulp chamber of a pre-existing tooth. The abutment assembly has a projecting abutment portion with one or more shape memory alloy sleeves or plates or elements extending along the abutment. Each of the sleeves has a length with at least one curved or arcuate portion. Energy may be applied to the elements such that the arcuate portion flattens to allow for the oral appliance to be placed thereupon while removal of the energy allows the elements to reconfigure into its curved configuration thereby locking the oral appliance to the abutment. Removal of the oral appliance may be effected by reapplication of energy to the elements.

WO16139671 discloses a dental abutment comprising first and second ends, each configured for being secured to an element of a dental reconstruction system, is provided. The dental abutment comprises an abutment housing defining a first axis and comprising the first end, and a positioning element received therewithin, defining a second axis and comprising the second end. The dental abutment is configured to selectively permit free continuous three-dimensional rotation of the positioning element through a range of orientations within the abutment housing, and arrest the positioning element within the abutment housing at any of the orientations. Further provided is an integrated dental implant comprising an implant portion with an abutment portion as provided.

US 5069622 discloses a spacer for a dental implant disposed between a fixture implanted in the jaw bone and a dental bridge or artificial tooth.

KR101881421 B1 discloses an assembly comprising a fixture included with a screw part that is connected with a base abutment part, wherein the screw part is included in a lower end of a thread. A lower part of a center hole is arranged with the fixture. An upper portion abutment is inserted into a polygonal groove that is formed in an upper part of the center hole. An inlet hole is formed on an upper portion abutment. A screw is connected in the screw part. The base abutment part is connected with the upper portion abutment and arranged with a healing cap and truncated cone-shaped scan body. A circumference surface of the base abutment part is arranged on an inclined surface.

### GENERAL DESCRIPTION

According to the present invention as defined in the claims, there is provided a dental abutment assembluy configured for securing a dental reconstruction element to a dental implant, said dental implant configured for adjustably mounting a dental reconstruction element over a dental implant.

Herein after in the specification and claims, the term *"dental reconstruction element"* is used in its broad sense and denotes any form, any full or partial, of a support bar, mini support bar, full/partial denture, full or partial dental bridge, dental crown, or any other similar dental element constituting or supporting any type of dental prosthesis, either in full or partial.

Other aspects of the disclosure which do not form part of the present invention are directed to a dental reconstruction set and system configured for securing a dental reconstruction element to a dental implant via a dental abutment, and a method for performing same.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

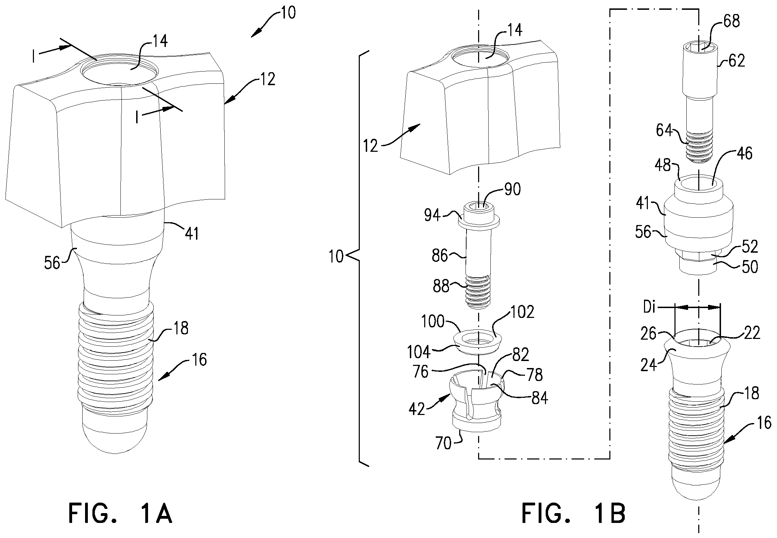

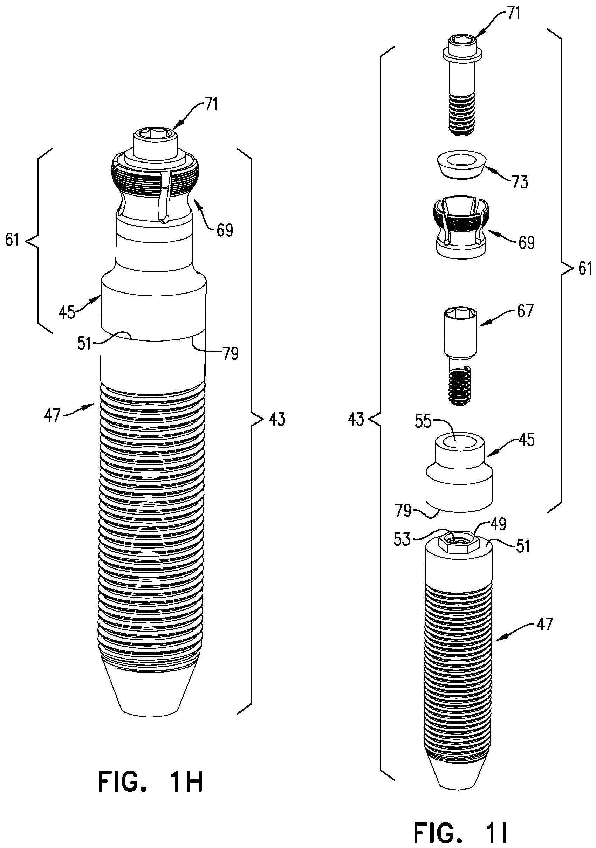

**Fig. 1A** is a top perspective view of a dental set comprising a dental abutment according to a first embodiment of the present disclosure which does not form part of the inventi on;
**Fig. 1B** is an exploded view of Fig. 1A;

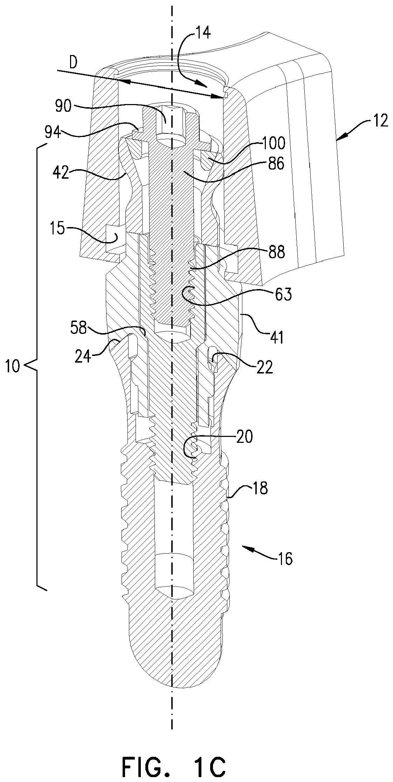

**Fig. 1C** is a longitudinal section taken along line I - I in Fig. 1A;

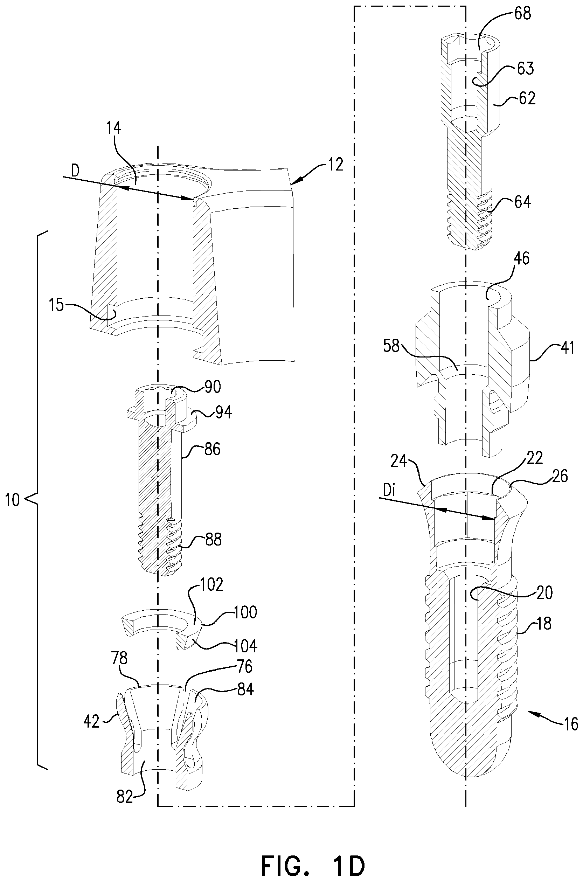

**Fig. 1D** is an exploded view of Fig. 1C;

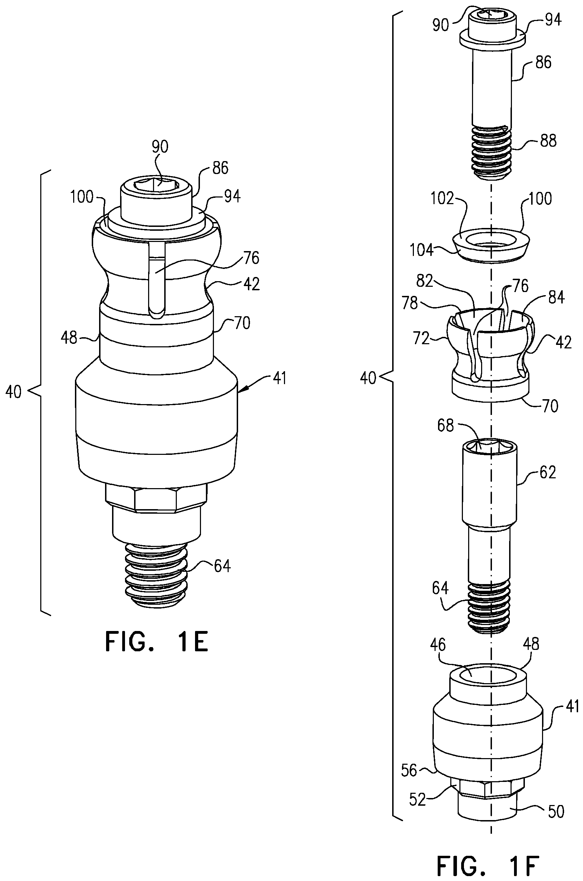

**Fig. 1E** is a top perspective view of a dental abutment used in the dental set of Fig. 1A;
**Fig. 1F** is an exploded view of Fig. 1E;

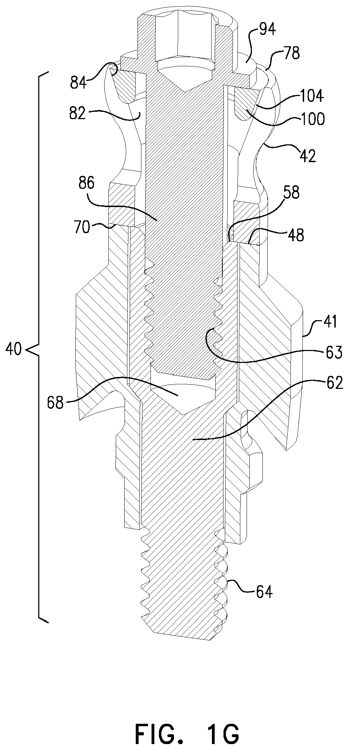

**Fig. 1G** is a longitudinal section of Fig. 1E;
**Figs. 1H** to **1K** are directed to a modification of the dental set illustrated in Figs. 1A to 1G, wherein:
   **Fig. 1H** is a top perspective view of the dental set;
   **Fig. 11** is an exploded view of Fig. 1H;

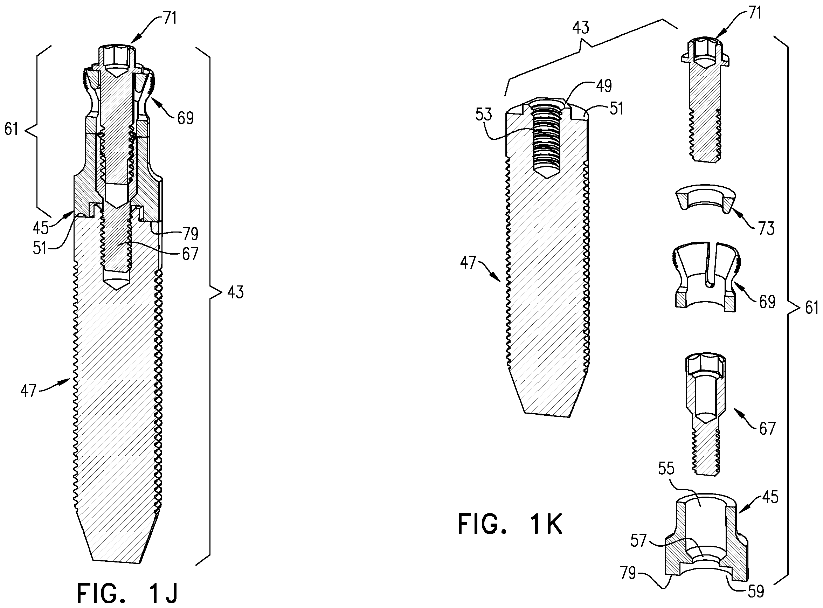

   **Fig. 1J** is a longitudinal section of Fig. 1H;
   **Fig. 1K** is an exploded view of Fig. 1J;

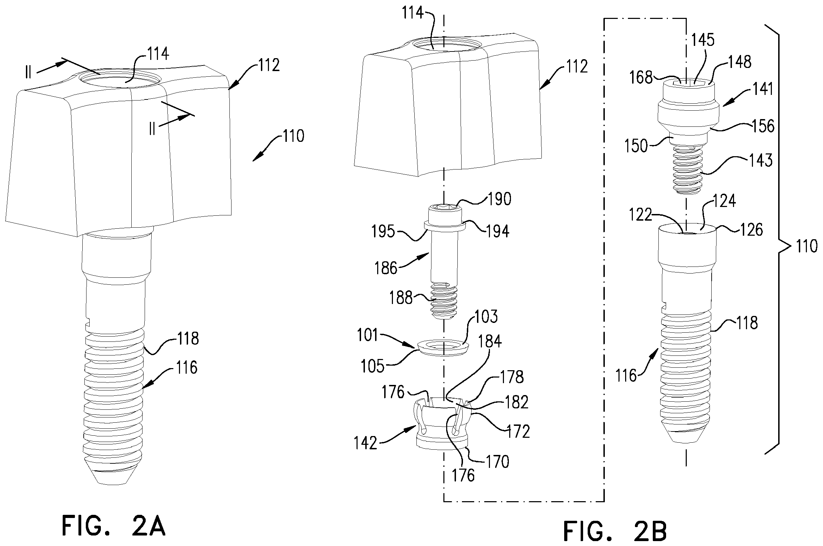

   **Fig. 2A** is a top perspective view of a dental set comprising a dental abutment according to a second embodiment of the present disclosure which does not form part of the invention;
   **Fig. 2B** is an exploded view of Fig. 2A;

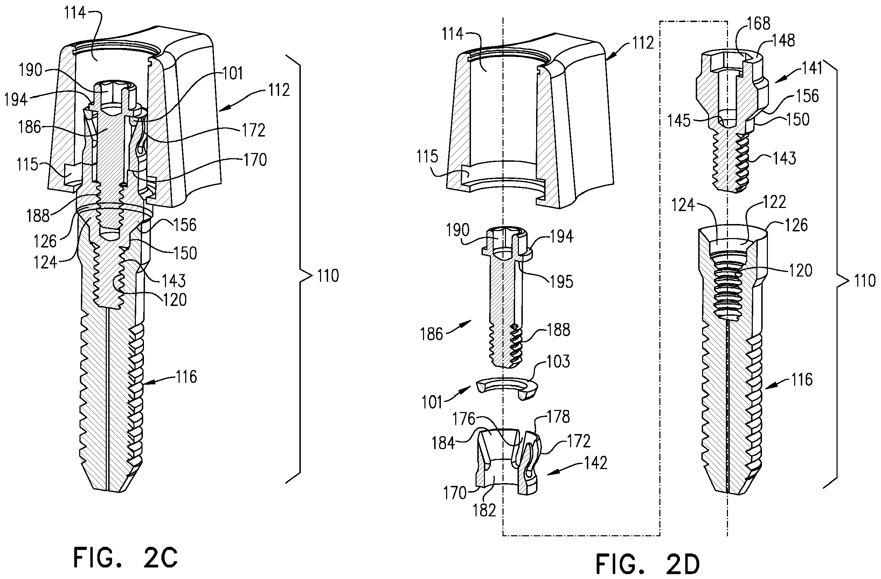

   **Fig. 2C** is a longitudinal section taken along line II - II in Fig. 2A;
   **Fig. 2D** is an exploded view of Fig. 2C;

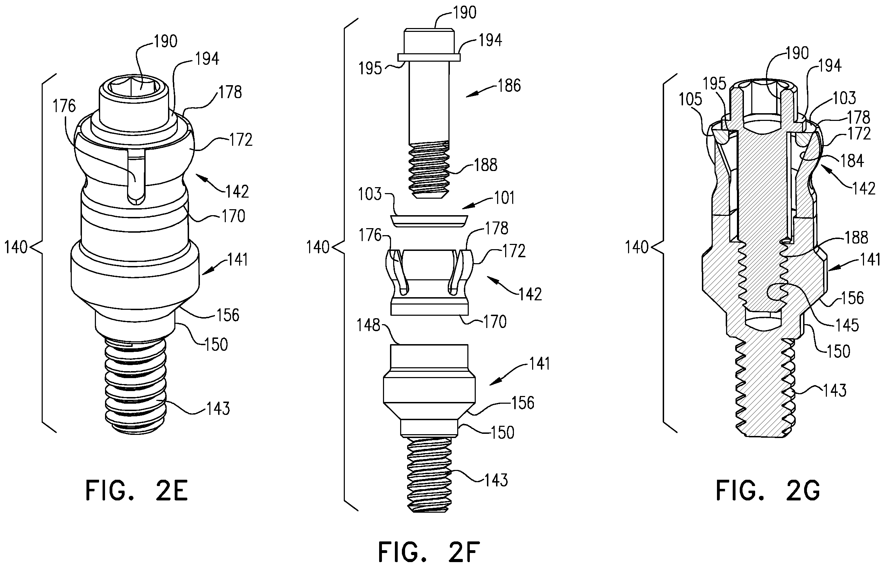

   **Fig. 2E** is a top perspective view of a dental abutment used in the dental set of Fig. AA;
   **Fig. 2F** is an exploded view of Fig. 2E;
   **Fig. 2G** is a longitudinal section of Fig. 2E;

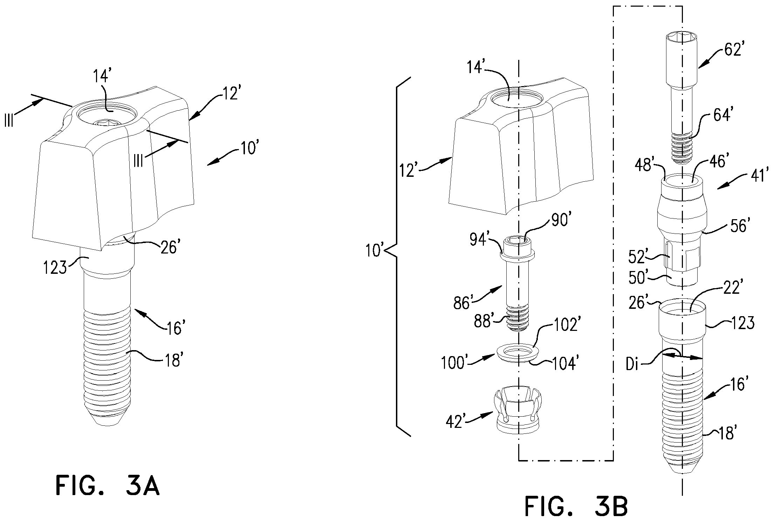

   **Fig. 3A** is a top perspective view of a dental set comprising a dental abutment according to a modification of the second embodiment of the present disclosure which does not form part of the invention;
   **Fig. 3B** is an exploded view of Fig. 3A;

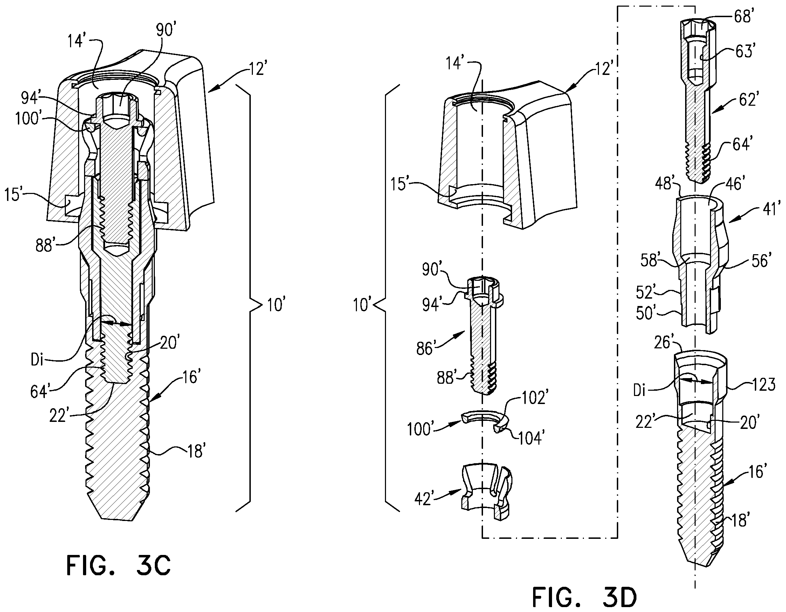

   **Fig. 3C** is a longitudinal section taken along line III - III in Fig. 3A;
   **Fig. 3D** is an exploded view of Fig. 3C;

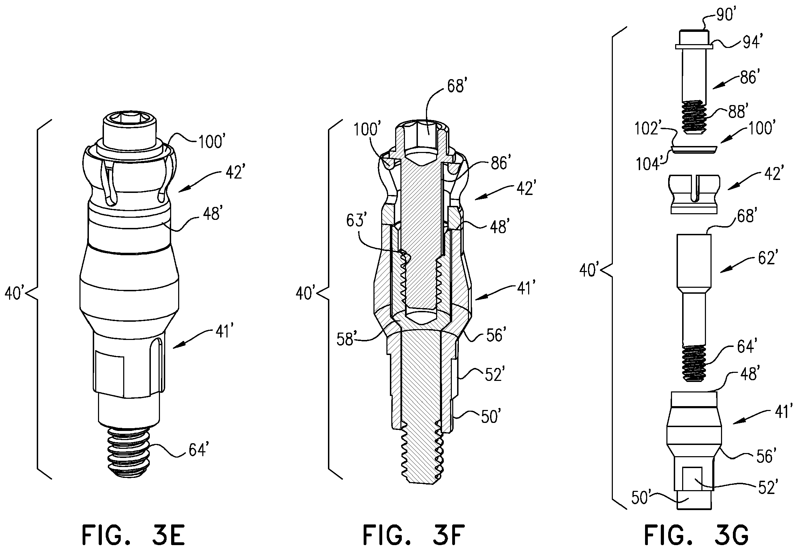

   **Fig. 3E** is a top perspective view of a dental abutment used in the dental set of Fig. 3A;
   Fig. 3F is an exploded view of Fig. 3E;
   **Fig. 3G** is a longitudinal section of Fig. 3E;

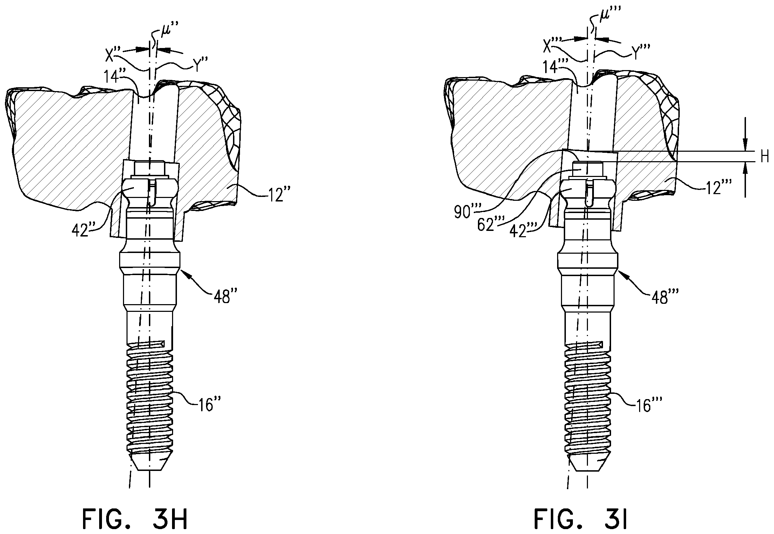

   **Figs. 3H** and **31** illustrate examples of the dental set of Fig. 3A, demonstrating tolerance rectifying;

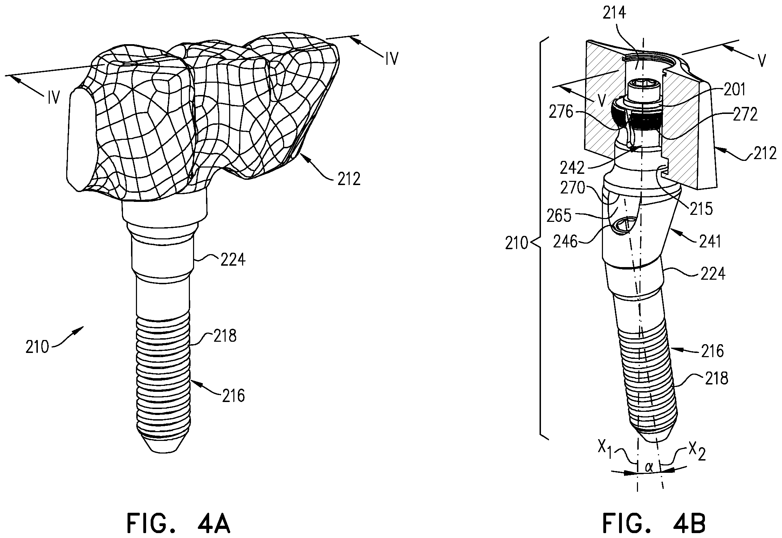

   **Fig. 4A** **is** a top perspective view of a dental set comprising a dental abutment according to the invention of the present disclosure;
   **Fig. 4B** is the same as Fig. 4A, however with a dental reconstruction element sectioned;

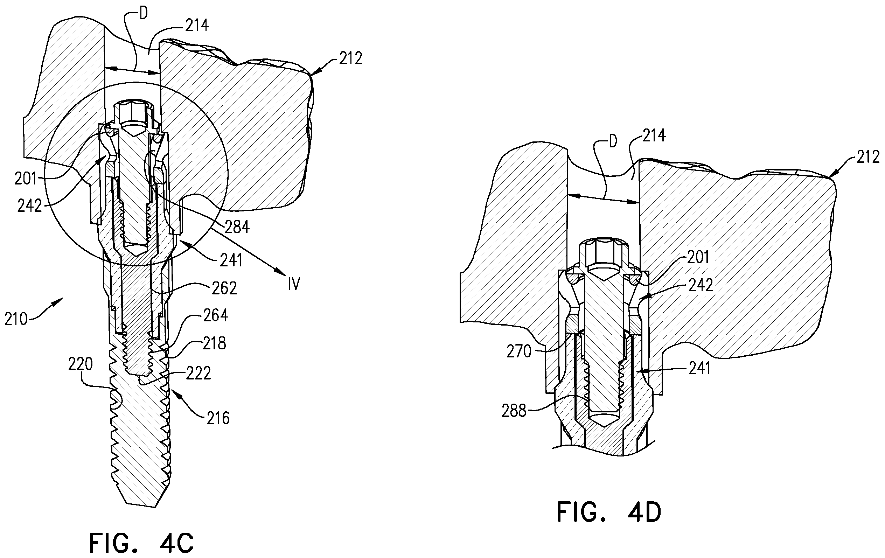

   **Fig. 4C** is a longitudinal section taken along line IV - IV in Fig. 4A;
   **Fig. 4D** is an enlargement of the portion marked IV in Fig. 4C;

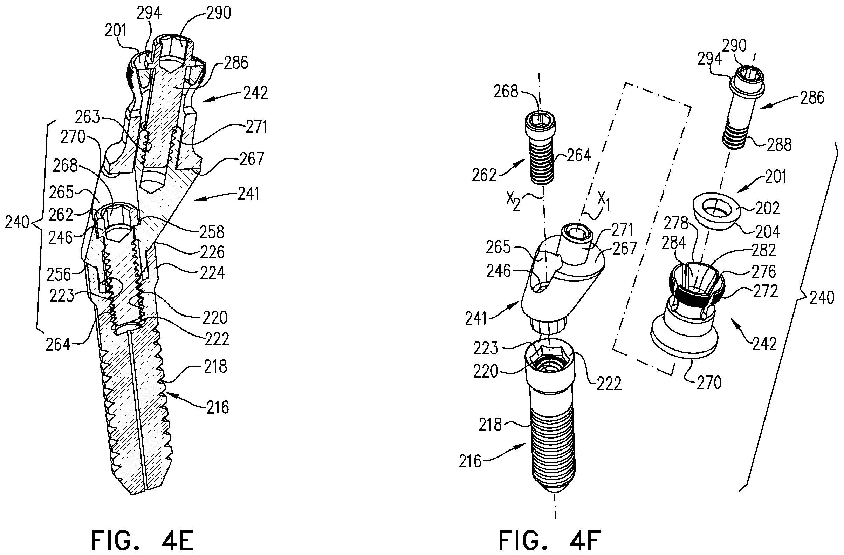

   **Fig. 4E** is a longitudinal section taken along line V - V in Fig. 4B;
   **Fig. 4F** is a an exploded view of Fig. 4E;

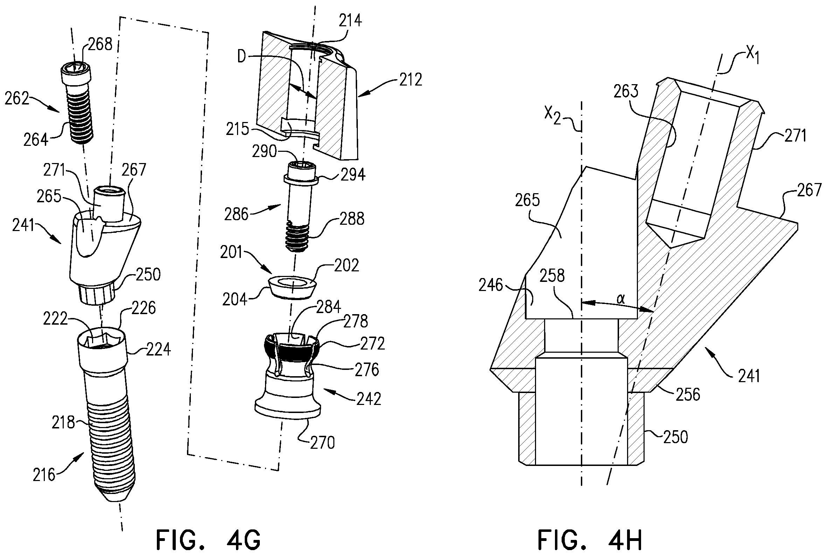

   **Fig.** 4G is a an exploded view of Fig. 4B;
   Fig. 4H is an enlarged planar sectioned view of the abutment used in the example illustrated in Fig. 4E;

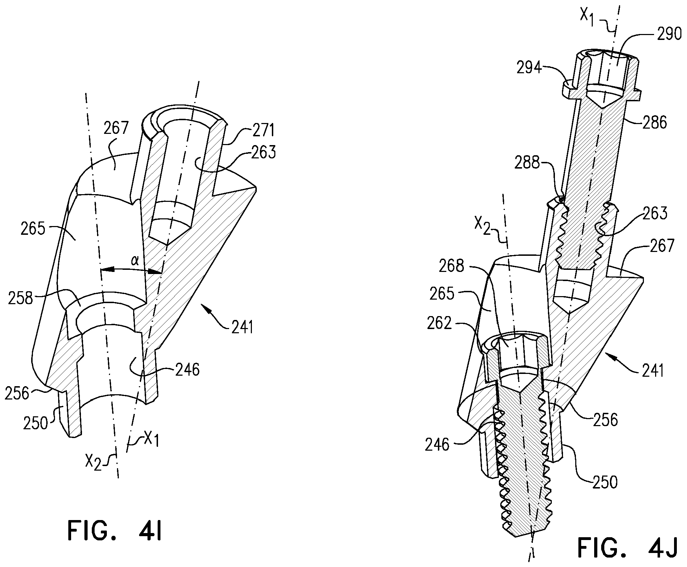

   Fig. 4I is a top perspective sectioned view of the abutment of Fig. 4H;
   Fig. 4J illustrates the abutment of Fig. 4I with threaded fasteners articulated thereto;

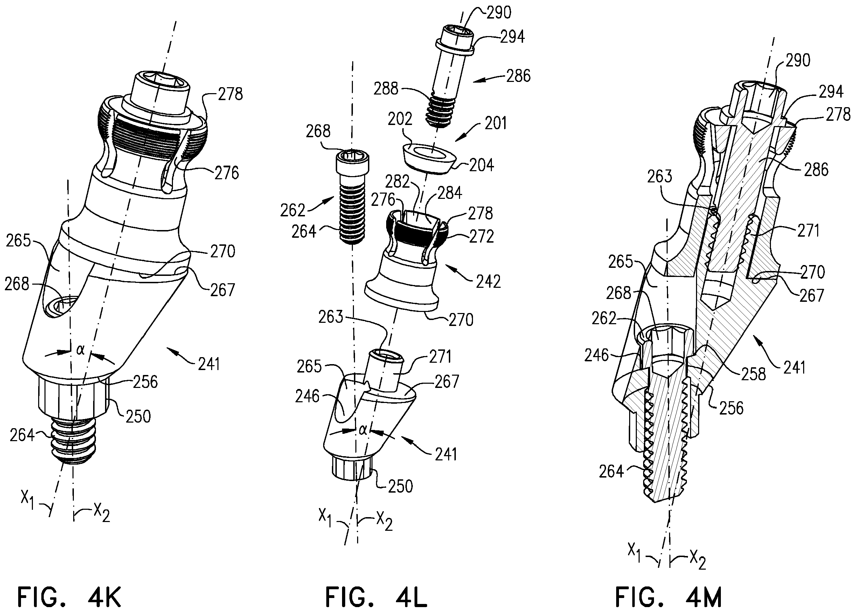

   Fig. 4K is a top perspective view of a dental abutment used in the dental set of Fig. 4A;
   **Fig. 4L** is an exploded view of Fig. 4K;
   **Fig. 4M** is a longitudinal section of Fig. 4K;

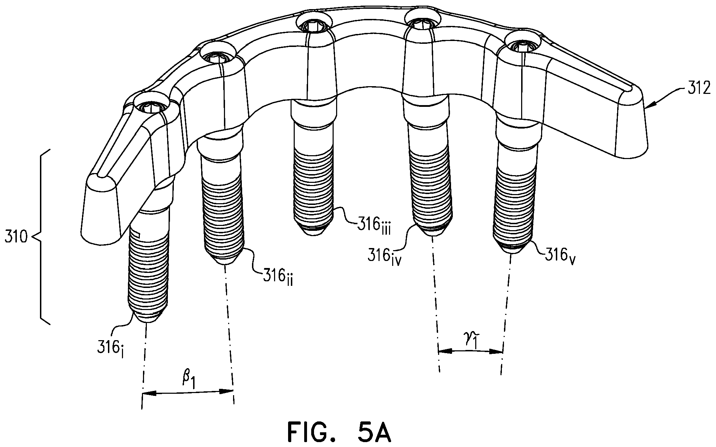

   **Fig. 5A** is a top perspective view of a dental reconstruction set comprising support bar mounted over an array of abutments according to examples of the present disclosure; and

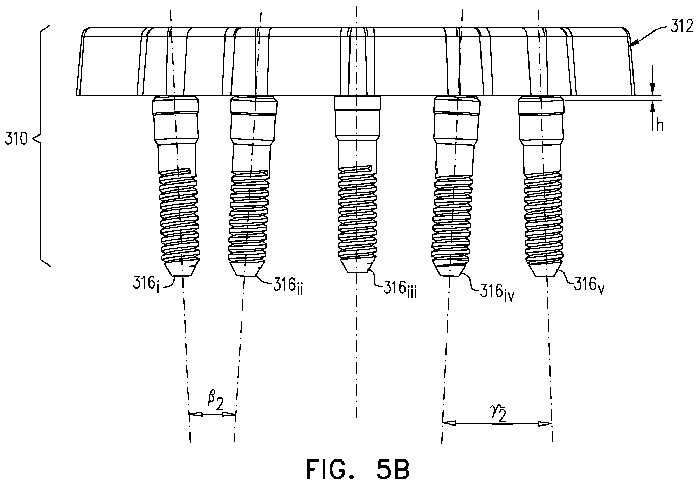

   **Fig. 5B** is a planar view of Fig. 5A.

### DETAILED DESCRIPTION OF EMBODIMENTS

Attention is first directed to Figs. 1A to 1G of the drawings, directed to a first embodiment of the disclosure. A dental set generally designated **10** comprises a schematically illustrated dental reconstruction element which in the illustrated example is part of a partial bridge **12.** It is however appreciated that the dental reconstruction element can assume any form, any full or partial, of a support bar, mini support bar, full/partial denture, full or partial dental bridge, dental crown, or any other similar dental element constituting or supporting any type of dental prosthesis, either in full or partial.

The dental reconstruction element **12** is configured with a bore **14** having a nominal diameter **D** (Figs. 1C and 1D) with an annular groove **15** at a bottom portion thereof, the purpose of which will become apparent herein after.

A dental implant **16,** of known structure is provided, said dental implant **16** comprising an external threading **18** for fitting into a cavity of a jaw bone (not shown) of an individual and an internal threading **20** at an abutment receiving bore **22,** having a nominal diameter **Di** configured at a top end of the dental implant, and further wherein the dental implant comprises a tapering top collar **24** with a smooth top edge **26.** Also, the dental abutment is configured with a polygonal (hexagonal in the illustrated example) head socket for fastening the dental implant within the jaw bone.

An abutment assembly **40** according to a first embodiment of the disclosure is seen isolated in Figs. 1E to 1G. The abutment assembly **40** comprises an abutment body **41** and a tubular reconstruction element support **42.** The abutment body is tubular and is configured with a through-going abutment bore **46** extending between a top (proximal) flat support end **48,** and a bottom (distal) end configured with a boss **50** having an external diameter corresponding with **Di** of the abutment receiving bore **22,** and is further configured with polygonal shaped portion **52** and a downward facing skirt portion **56.** The arrangement is such that the boss **50** is shaped and sized for snug receiving within the abutment receiving bore **22,** with the skirt portion **56** resting over the tapering top collar **24** with abutting surfaces, thereby substantially eliminating movement between the elements.

The abutment bore **46** is further configured with an inside fastener shoulder **58** whereby the abutment body **41** can be couplable to the dental implant **16** by an implant fastener **62** configured with an external threaded portion **64** (corresponding with the internal threading **20** at the abutment receiving bore **22**) and a polygonal fastening socket **68,** whereby fastening the abutment body **41** with the dental implant **16** is sturdy and substantially motion-free. The implant fastener **62** is further configured at a top portion thereof with an internal thread **63.**

The tubular reconstruction element support **42** has a distal (bottom) flat seat end **70** bearing flush against the flat support end **48** of the abutment body **41,** and is configured with a proximal anchoring head portion **72** configured with four symmetrically disposed, axially extending, slots **76,** extending open from a top edge **78** of the reconstruction element support **42.** Whilst in the illustrated examples the slots are axially disposed, it is appreciated that the slots can be helically disposed about the longitudinal axis of the reconstruction element support **42,** and likewise, the reconstruction element support **42** can be configured with one or more slots. The reconstruction element support **42** is further configured with an axially extending through-going head bore **82** and inside tapering top section **84.** A manipulating fastener, namely bolt **86** has a threaded portion **88** corresponding with internal thread **63** of the implant fastener **62** and has a polygonal socket head **90** for fastening thereof, as well as a radially extending annular manipulating shoulder **94.**

The abutment assembly further comprises a manipulating disc **100** configured with a top surface **102** and a tapering side wall **104.** At assembly, the manipulating disc **100** is disposed within the tapering section **84** of the reconstruction element support **42,** with the bottom face of the manipulating shoulder **94** of the manipulating fastener **86** bearing flush against the top surface **102.** As a particular example, the top surface **102** of the manipulating disc **100** and the bottom face of the manipulating shoulder **94** are flat.

The arrangement is such that fastening the manipulating fastener **86** acts both to fasten the reconstruction element support **42** to the abutment body **41** (by coupling to implant fastener **62),** and to apply axially directed force to the manipulating disc **100,** which in turn gives rise to outwardly directed radial forces, aimed to the inside surface **84** of the reconstruction element support, causing the anchoring head (i.e. the segments) of the reconstruction element support **42** to expand and tighten against inside wall surface of bore **14** of the dental reconstruction element **12.**

The arrangement disclosed hereinabove thus provides for compensating positioning tolerances and inaccuracies residing between axes of the dental implant **16** and the dental reconstruction element **12,** where such tolerances can reside about a longitudinal axis ('Z axis') or about axes intersecting said longitudinal axis('X axis' and 'Y axis'). Such tolerances which may occur owing to measuring deviations, manufacturing deviations, etc. Such tolerances can extend axially, i.e. along the longitudinal axes of the dental system, or in planes intersecting said longitudinal axes.

It is noted that manipulating fastener **86** is finer than the implant fastener **62** and further that the reconstruction element support **42** can be made of the same material as that of the abutment body **41,** or of a different material, with different mechanical properties. In addition, it is appreciated that the external surface of the anchoring head portion **72** of the reconstruction element support **42** can be smooth, as in the illustrated examples, or it can be surfaced for improved engagement with inside wall surface of the bore **14** of the dental reconstruction element **12.** Such surfacing can be, for example, serrations, knurling, axial/annular ridges, axial/annular grooves, roughened surfacing, etc. Such configurations can be applied to any of the examples and embodiments disclosed herein.

Reverting to the assembled dental set **10,** a sealing ring (not shown), e.g. a resilient O-ring, or a stainless steel ring, or any other material ring, can be fitted into the annular groove **15** within the bore **14** of the dental reconstruction element **12,** such that at the assembled position the sealing ring is bears against an external surface of the abutment body **41,** suitable to eliminate or substantially reduce saliva and food from entering into a space extending between the bore of the dental reconstruction element and the external surface of the abutment body. However, at times a sealing ring can be obviated.

Referring to Figs. 1H to 1K there is illustrated a modification of the dental set **43** according to an aspect of the disclosure, wherein the significant difference resides in the shape of the abutment body **45** made suitable for mounting over a dental implant **47** which is configured with an external polygonal head.

The dental implant **47** is thus configured with an external polygonal head **49** projecting from a top surface **51** and configured with an internally threaded bore **53.** In turn, the abutment body **45** is configured with a through-going abutment bore **55** with an inside fastener shoulder **57** above a head receiving space **59** and a bottom surface **79.**

Other components of the dental set **43** are similar with those disclosed in connection with the example of Figs. 1A to 1G, wherein the abutment assembly **61** further comprises an implant fastener **67** for coupling the abutment body **45** to the dental implant **47,** through the abutment bore **55,** a tubular reconstruction element support **69** (substantially identical with tubular reconstruction element support **42)** and articulated to the abutment body **45** by a manipulating fastener bolt **71** via a manipulating disc **73.**

At the assembled position (Figs. 1H and 1J) abutment body **45** is fastened over the dental implant **47** with the bottom surface **79** baring flush against surface **51** and with the external polygonal head **49** of the dental implant **47** received within the head receiving space **59.** After tightening the implant fastener **67,** the reconstruction element support **69** is positioned over the abutment body **45** and once the dental reconstruction element (not shown) is placed thereover, the manipulating fastener bolt **71** is tightened, thereby setting the accurate, true position of the dental reconstruction element thereover.

In the two embodiment of Figs. 1A to 1K the abutment body **41; 45** is couplable to the dental implant by a separate implant fastener **62; 67.** However, turning now to the embodiment illustrated in Figs. 2A to 2G of the drawings, there is illustrated an example wherein the abutment body is couplable to the dental implant by an integral implant fastener. For sake of clarification, in the following example of Figs. 2A to 2G, like elements as in Figs 1A to 1G are designated with like reference numbers, however shifted by 100.

The dental set of Figs. 2 generally designated **110** comprises a schematically illustrated dental reconstruction element which in the illustrated example is part of a partial bridge **112.**

The dental reconstruction element **112** is configured with a bore **114** having a nominal diameter **D** (Figs. 2C and 2D) with an annular groove **115** at a bottom portion thereof, the purpose of which being similar to the disclosure in connection with the previous example.

A dental implant **116,** of known structure is provided, said dental implant **116** comprising an external threading **118** for fitting into a cavity of a jaw bone (not shown) of an individual and an internal threading **120** at an abutment receiving bore **122,** having a nominal diameter configured at a top end of the dental implant, and further wherein the dental implant comprises a tapering top collar **124** with a smooth top edge **126.** The dental abutment is configured with a polygonal head socket for fastening the dental implant within the jaw bone.

An abutment assembly **140** according to the second embodiment of the disclosure is seen isolated in Figs. 2E to 2G. The abutment assembly **140** comprises an abutment body **141** and a tubular reconstruction element support **142.** The abutment body **141** is configured at a distal (bottom) end thereof with an integral, solid threaded stem **143** having an external nominal diameter corresponding with that the abutment receiving threaded bore **122.** Further, the dental body **141** is configured at its top side with an internally threaded bore **145** and having and a polygonal fastening socket **168.**

The implant body **141** has a top (proximal) flat support end **148,** and a bottom (distal) end configured with a boss **150** having an external diameter corresponding with inside diameter of the abutment receiving bore **122,** and is optionally configured with tapering portion **156.** The arrangement is such that the boss **150** is shaped and sized for snug receiving within the abutment receiving bore **122,** with the tapering portion **156** resting over the tapering top collar **124** with abutting surfaces, thereby substantially eliminating movement between the elements, once threaded stem **143** is fastened within the threaded receiving bore **122,** whereby fastening the abutment body **141** with the dental implant **116** is sturdy and substantially motion-free.

The tubular reconstruction element support **142** has a distal (bottom) flat seat end **170** bearing flush against the flat support end **148** of the abutment body **141,** and is configured with a proximal anchoring head portion **172** configured with four symmetrically disposed, axially extending, slots **176,** extending open from a top edge **178** of the reconstruction element support **142.** Whilst in the illustrated examples the slots are axially disposed, it is appreciated that the slots can be helically disposed about the longitudinal axis of the reconstruction element support **142,** and likewise, the number of slots can vary.

The reconstruction element support **142** is further configured with an axially extending through-going head bore **182** and inside tapering top section **184.** A manipulating fastener, namely bolt **186** has an external threaded portion **188** corresponding with internal thread **145** of the abutment body **141** and has a polygonal socket head **190** for fastening thereof, as well as a radially extending annular manipulating shoulder **194** having a bottom face **195.**

The abutment assembly **140** further comprises a manipulating disc **101** configured with a top surface **103** and a tapering (bottom) side wall **105.** At assembly, the manipulating disc **101** is disposed within the tapering section **184** of the reconstruction element support **142,** with the bottom face **195** of the manipulating shoulder **194** of the manipulating fastener **186** bearing flush against the top surface **103.** In this particular example too, the top surface of the manipulating disc and the bottom face of the manipulating shoulder are flat.

The arrangement is such that fastening the manipulating fastener **186** acts both to fasten the reconstruction element support **142** to the abutment body **141,** and to apply axially directed force to the manipulating disc **101,** which in turn gives rise to outwardly directed radial forces, aimed to the inside surface **184** of the reconstruction element support, causing the anchoring head (i.e. the segments) of the reconstruction element support **142** to expand and tighten against inside wall surface of bore **114** of the dental reconstruction element **112.**

Similar to the previous example, the arrangement disclosed hereinabove thus provides for compensating positioning tolerances and inaccuracies residing between axes of the dental implant **116** and the dental reconstruction element **112,** where such tolerances can reside about a longitudinal axis ('Z axis') or about axes intersecting said longitudinal axis('X axis' and 'Y axis'). Such tolerances which may occur owing to measuring deviations, manufacturing deviations, etc. Such tolerances can extend axially, i.e. along the longitudinal axes of the dental system, or in planes intersecting said longitudinal axes.

Likewise, it is appreciated that the external surface of the anchoring head portion **172** of the reconstruction element support **142** can be smooth, as in the illustrated examples, or it can be surfaced for improved engagement with inside wall surface of the bore **114** of the dental reconstruction element **112.** Such surfacing can be, for example, serrations, knurling, axial/annular ridges, axial/annular grooves, roughened surfacing, etc.

Further attention is now directed to Figs. 3A to 3G directed to a modification of the first embodiment illustrated in Figs. 1A to 1G. for sake of simplicity, like elements are designated with like reference numbers, with the addition of a ' indicator.

In fact, the dental set **10'** is similar to that disclosed in the example of Figs. 1A to 1G, however with different design concerning the abutment body **41'** and the dental implant **16',** respectively. Accordingly, reference in the following example is emphasized on the different elements.

The dental set **10'** thus comprises a schematically illustrated dental reconstruction element which in the illustrated example is part of a partial bridge **12'** configured with a bore **14'** having a nominal diameter.

A dental implant **16'** comprising an external threading **18'** for fitting into a cavity of a jaw bone (not shown) of an individual and an internal threading **20'** having a nominal diameter **Di** at an abutment receiving bore **22',** configured at a top end of the dental implant, with a top head portion **123** with a smooth top edge **26'.**

An abutment assembly **40'** comprises an abutment body **41'** and a tubular reconstruction element support **42',** the later being similar to reconstruction element support **42** of the example of Figs, 1A to 1G and reference is made back thereto.

The abutment body **41'** is tubular and is configured with a through-going abutment bore **46'** extending between a top (proximal) flat support end **48',** and a bottom (distal) end configured with a boss **50'** having an external diameter corresponding with **Di** of the abutment receiving bore **22',** and is further configured with a gripping portion **52'** and a tapering portion **56'** configured for snug and fit receipt within the abutment receiving bore **22'** of the dental implant **16'** . The arrangement is such that the boss **50'** is shaped and sized for snug receiving within the abutment receiving bore **22',** with the tapering portion **56'** abutting surfaces of the bore **22',** thereby substantially eliminating movement between the elements.

The abutment bore **46'** of the abutment body **41'** is further configured with an inside fastener shoulder **58'** whereby the abutment body **41'** can be couplable to the dental implant **16'** by an implant fastener **62'** configured with an external threaded portion **64'** (corresponding with the internal threading **20'** at the abutment receiving bore **22')** and a polygonal fastening socket **68',** whereby fastening the abutment body **41'** with the dental implant **16'** is sturdy and substantially motion-free. The implant fastener **62'** is further configured at a top portion thereof with an internal thread **63'.**

A manipulating fastener, namely bolt **86'** has a threaded portion **88'** corresponding with internal thread **63'** of the implant fastener **62'** and has a polygonal socket head **90'** for fastening thereof, as well as a radially extending annular manipulating shoulder **94'.**

The abutment assembly further comprises a manipulating disc **100'** configured with a top surface **102'** and a tapering side wall **104'.** At assembly, the manipulating disc **100'** is disposed within the tapering section **84'** of the reconstruction element support **42',** with the bottom face of the manipulating shoulder **94'** of the manipulating fastener **86'** bearing flush against the top surface **102'.**

The arrangement is such that fastening the manipulating fastener **86'** acts both to fasten the reconstruction element support **42'** to the abutment body **41'** (by coupling to implant fastener **62'),** and to apply axially directed force to the manipulating disc 100', which in turn gives rise to outwardly directed radial forces, aimed to the inside surface **84'** of the reconstruction element support, causing the anchoring head (i.e. the segments) of the reconstruction element support **42'** to expand and tighten against inside wall surface of bore **14'** of the dental reconstruction element **12'.**

The arrangement disclosed hereinabove thus provides for compensating positioning tolerances and inaccuracies residing between axes of the dental implant **16** and the dental reconstruction element **12',** where such tolerances can reside about a longitudinal axis ('Z axis') or about axes intersecting said longitudinal axis('X axis' and 'Y axis'). Such tolerances which may occur owing to measuring deviations, manufacturing deviations, etc. Such tolerances can extend axially, i.e. along the longitudinal axes of the dental system, or in planes intersecting said longitudinal axes.

In addition, it is appreciated that the external surface of the anchoring head portion **72'** of the reconstruction element support **42'** can be smooth, as in the illustrated examples, or it can be surfaced for improved engagement with inside wall surface of the bore **14'** of the dental reconstruction element **12'.** Such surfacing can be, for example, serrations, knurling, axial/annular ridges, axial/annular grooves, roughened surfacing, etc. Such configurations can be applied to any of the examples and embodiments disclosed herein.

Likewise, a sealing ring (not shown) can be into annular groove **15'** of the dental reconstruction element **12,** such that at the assembled position the sealing ring is bears against an external surface of the abutment body **41',** suitable to eliminate or substantially reduce saliva and food from entering into a space extending between the bore of the dental reconstruction element and the external surface of the abutment body.

In Fig. 3H there is illustrated a dental set as per the example of Figs 3A to 3G, wherein the dental implant **16"** and the associated abutment body **48"** and the reconstruction element support **42"** extend along a longitudinal axis **X",** whilst the dental reconstruction element **12"** is disposed at an angle **Y"** thereabout, with an angle **µ"** therebetween, and however is set in place by the reconstruction element support **42"** as discussed above.

Yet an example of rectifying tolerance issues is exemplified in Fig. 3I, demonstrating a dental set as per the example of Figs 3A to 3G, wherein the dental implant **16‴** and the associated abutment body **48‴** and the reconstruction element support **42‴** extend along a longitudinal axis X'", whilst the dental reconstruction element **12‴** is disposed at an angle **Y‴** thereabout, with an angle **µ**‴ therebetween, and further wherein the dental reconstruction element **12‴** is spaced at a distance **H** from the top end of polygonal socket head **90‴** of the implant fastener **62'",** and however is set in place by the reconstruction element support **42"** as discussed above.

The embodiment of the present invention is disclosed in Figs. 4A to 4L directed to an adjustable dental set generally designated **210** and wherein for sake of clarification, in the following example like elements as in Figs 1A to 1G are designated with like reference numbers, however shifted by 200.

The dental set **210** comprises a dental reconstruction element which in the illustrated example is part of a partial bridge **212.** It is however appreciated that the dental reconstruction element can assume any form, any full or partial, of a support bar, mini support bar, full/partial denture, full or partial dental bridge, dental crown, or any other similar dental element constituting or supporting any type of dental prosthesis, either in full or partial.

The dental reconstruction element **212** is configured with a bore **214** having a nominal diameter **D** with an annular groove **215** at a bottom portion thereof, the purpose of which will become apparent herein after.

A dental implant **216,** of known structure is provided, said dental implant **216** comprising an external threading **218** for fitting into a cavity of a jaw bone (not shown) of an individual and an internal threading **220** at an abutment receiving bore **222,** having a nominal diameter, and further wherein the dental implant comprises a tapering top collar **224** with a smooth top edge **226,** and a polygonal head socket **223** for fastening the dental implant **216** within the jaw bone.

An abutment assembly **240** according to the embodiment of the invention is seen isolated in Figs. 4E and 4F. The abutment assembly **240** comprises an abutment body **241** and a tubular reconstruction element support **242.** The abutment body **241** is generally a tubular configured with a longitudinal second axis **X2** configured with a through-going abutment bore **246** configured with at a distal (bottom) end with a polygonal boss **250,** said polygonal boss configured for receiving within the polygonal head socket **223** of the dental abutment **216,** at discrete angular increments, depending of course on the number of faces of the polygonal socket **223** and the number of faces of the a polygonal boss **250.**

According to a particular example the external polygonal boss **250** of the abutment body **241** is a 12 faced polygon and the polygonal socket **223** of the dental implant **216** is a 6 faced polygon, imparting the abutment body axial angular increments of 30° over the dental implant. However, other combinations of polygonal boss and polygonal socket can be adopted, e.g. an 8 faced polygonal boss with an 8 faced polygonal socket, 8 faced polygonal boss with a 16 faced polygonal socket, a 6 faced polygonal boss with a 6 faced polygonal socket, etc.

The abutment body **241** is further configured with a tapering portion facing skirt portion **256** such that the boss **250** is shaped and sized for snug receiving within the abutment receiving bore **222,** with the skirt portion **256** resting within a corresponding tapering portion within the top collar **224** of the dental implant **216,** thereby substantially eliminating movement between the elements once coupled.

The abutment bore **246** is further configured with an inside fastener shoulder **258** whereby the abutment body **241** can be couplable to the dental implant **216** by an implant fastener **262** configured with an external threaded portion **264** (corresponding with the internal threading **220** at the abutment receiving bore **222)** and a polygonal fastening socket **268,** whereby fastening the abutment body **241** with the dental implant **216** is sturdy and substantially motion-free. The implant fastener **262** is accessible for fastening through an opening **265** configured at a flat top surface of the abutment body **241,** whereby the abutment body **241** are coupled to one another about the longitudinal second axis **X2.**

The abutment body **241** is further configured with a tubular boss **271** upwardly projecting from the flat surface **267** and extending along a first axis X1, said tubular boss **271** configured with an internal thread **263,** and wherein according to the particular illustrated example said first axis **X1** and said second axis **X2** intersect each other about an imaginary plane, wherein the angle **α** between the first axis and the second axis is in the range of about 3° to 8°, and typically about 5°.

The tubular reconstruction element support **242** has a distal (bottom) flat seat end **70** which at an assembled position bears flush against the flat surface **267** of the abutment body **241,** and is configured with a proximal anchoring head portion **272** configured with four symmetrically disposed, axially extending, slots **276,** extending open from a top edge **278** of the reconstruction element support **242.** Whilst in the illustrated examples the slots are axially disposed, it is appreciated that the slots can be helically disposed about the longitudinal axis of the reconstruction element support **242,** and likewise, the number of slots can vary.

The reconstruction element support **42** is further configured with an axially extending through-going head bore **282** and inside tapering top section **284.** A manipulating fastener, namely bolt **286** has a threaded portion **288** corresponding with internal thread **263** of the implant fastener **262** and has a polygonal socket head **290** for fastening thereof, as well as a radially extending annular manipulating shoulder **294.**

The abutment assembly **240** further comprises a manipulating disc **201** configured with a flat top surface **202** and a tapering side wall **204.** At assembly, the manipulating disc **201** is disposed within the tapering section **284** of the reconstruction element support **242,** with the bottom face of the manipulating shoulder **294** of the manipulating fastener **286** bearing flush against the flat top surface **202.**

The arrangement is such that fastening the manipulating fastener **286** acts both to fasten the reconstruction element support **242** to the abutment body **241** (by coupling to implant fastener **262),** and to apply axially directed force to the manipulating disc **201,** which in turn gives rise to outwardly directed radial forces, aimed to the inside surface **284** of the reconstruction element support, causing the anchoring head (i.e. the segments) of the reconstruction element support **242** to expand and tighten against inside wall surface of bore **214** of the dental reconstruction element **212.**

The arrangement disclosed hereinabove thus provides for compensating positioning tolerances and inaccuracies residing between axes of the dental implant **216** and the dental reconstruction element **212,** where such tolerances can reside about a longitudinal axis ('Z axis') or about axes intersecting said longitudinal axis('X axis' and 'Y axis'). Such tolerances which may occur owing to measuring deviations, manufacturing deviations, etc. Such tolerances can extend axially, i.e. along the longitudinal axes of the dental system, or in planes intersecting said longitudinal axes.

The angular deviation α between the first axis **X1** and the second axis **X2,** together with the discrete, incremental angular positioning of the abutment assembly **240** with respect to the longitudinal axis of the dental abutment **216** offers a unique configuration providing support of a dental reconstruction element at a variety of setups, regardless of the preset axial alignment of the dental implant, yet at a sturdy manner and further with the ability to overcome three dimensional tolerances.

In addition, it is appreciated that the external surface of the anchoring head portion **272** of the reconstruction element support **242** is surfaced for improved engagement with inside wall surface of the bore **14** of the dental reconstruction element **12.** Such surfacing in the present example, comprises annular ridges. Though it can be, for example, serrations, knurling, axial/annular ridges, axial/annular grooves, roughened surfacing, etc.

Reverting to the assembled dental set **210,** a sealing ring (not shown), e.g. a resilient O-ring, or a metal ring, can be fitted into the annular groove **215** within the bore **214** of the dental reconstruction element **212,** such that at the assembled position the sealing ring is bears against an external surface of the abutment body **241,** suitable to eliminate or substantially reduce saliva and food from entering into a space extending between the bore of the dental reconstruction element and the external surface of the abutment body.

Figs 5A and 5B of the drawings illustrate a dental set **310** comprising a dental reconstruction element being a support bar **312** mounted over 5 dental implants **316ᵢ** to **316ᵥ.** It is noted that at least some of the dental implants **316ᵢ** to **316ᵥ** are not parallelly disposed, at times in more than one axis. For example, dental implant **316ᵢ** is angularly offset at angles **β₁** and **β₂** with respect to dental implant **316ᵢᵢ,** and dental implant 316iv is angularly offset at angles γ₁ and γ₂ with respect to dental implant **316ᵥ.** Such angular disorders, as well as tolerances and inaccuracies residing between axes of the dental implants **316ᵢ** to **316ᵥ** and the dental reconstruction element **312** e.g. axial (elevation) gap **h** (Fig. 5B) can be overcome by dental abutments according to any of the herein disclosed embodiments, (such tolerances and inaccuracies may occur owing to measuring deviations, manufacturing deviations, etc.).

## Claims

1. A dental abutment assembly (240) for securing a dental reconstruction element (212) to a dental implant (216), wherein the dental reconstruction element (212) has a bore (214) and the dental implant (216) comprises an external threading (218) for fitting into a cavity of a jaw bone and an abutment receiving bore (222) with a polygonal head socket (223), the dental abutment assembly (240) comprising a cylindrical abutment body (241), a tubular reconstruction element support (242) and a manipulating disc (201);
wherein the abutment body (241) comprises a tubular boss (271), upwardly projecting from a flat support surface end (267) and extending along a first axis (X1), and provided with a through-going abutment bore (246) along a second axis (X2) configured with a distal bottom end with a polygonal boss (250) configured for receiving within the polygonal head socket (223) of the dental abutment (216) for coupling the abutment body (241) to the dental implant (216) along said second axis (X2),
wherein the first axis (X1) and the second axis (X2) intersect each other about an imaginary plane by an angle (α), wherein the angle (α) between the first axis (X1) and the second axis (X2) is about 3° to 8°, tipically about 5°;
wherein the reconstruction element support (242) has a proximal anchoring head portion (272) configured with at least one slot (276), and a distal bottom flat seat end (270) bearing flush against the flat support surface end (267) of the abutment body (241), said reconstruction element support (242) is further configured with an axially extending through-going head bore (282) with an inside tapering top section (284),
wherein the manipulating disc (201) is configured with a flat top surface (202) and a tapering side wall (204),
whereby the manipulating disc (201) is disposable within the tapering section (284) of the reconstruction element support (242) and the reconstruction element support (242) is couplable to the abutment body (241) by a manipulating fastener (286) extending through the through-going head bore (282) and bearing flush against the flat top surface (202) of the manipulating disc (201) to fasten the reconstruction element support (242) to the abutment body (241) and to apply axially directed force to the manipulating disc (201) which gives rise to outwardly directed radial forces, aimed to the inside tapering top section (284) of the reconstruction support element (242), causing the anchoring head portion (272) to expand and tighten against inside wall surface of the bore (214) of the dental reconstruction element (212).

2. The dental abutment assembly according to claim 1, wherein said through-going abutment bore (246) of the abutment body (241) is configured with an inside fastener shoulder (258), whereby the abutment body (241) is couplable to the dental implant (216) by a implant fastener (262) extending through the through-going abutment bore (246) of the the abutment body (241).

3. The dental abutment assembly according to claim 1, wherein the manipulating fastener (286) can be screwed coupled within an internal threading (263) configured within an implant fastener (262).

4. The dental abutment according to claim 1, wherein the manipulating fastener (286) is screw coupled within an internal threading (263) configured within the tubular boss (271) of the abutment body (241).

5. The dental abutment assembly according to claim 1, wherein the at least one slot (276) of the proximal anchoring head portion (272) of the reconstruction element support (242) extends from the proximal anchoring head portion (272) towards the distal bottom flat seat end (270) of the reconstruction element support (242).

6. The dental abutment assembly according to claim 1, wherein the polygonal boss (250) of the abutmenet body (241) is couplable at discrete angular increments within the polygonal head socket (223) of the dental implant (216), said polygonal boss (250) coextends along said second axis (X2).

7. The dental abutment assembly according to claim 1, wherein the abutment body (241) is couplable to the dental implant (216) directly or indirectly, with an intermediate adapter seat member disposed therebetween, wherein the adapter seat member has a body with a through going bore extending between abutment end mimicking an external head portion of the dental implant (216), and an implant end configured for bearing over an internal head portion of the dental implant (216).

8. The dental abutment assembly according to claim 7, wherein the adapter seat member is integral with or integrated with the abutment body.

9. The dental abutment assembly according to claim 1, wherein a dental implant end of the abutment body (241) is configured for direct bearing over an external cylindrical head portion of the dental implant (216), or over an adapter seat member extending between the abutment body (2141) and the dental implant (216).

10. The dental abutment assembly according to claim 1, wherein a dental implant end of the abutment body (241) is cylindrical and is configured for at least partially insertion into an open end of the dental implant (216).

11. The dental abutment assembly according to claim 1, wherein a portion of the abutment body (241) is configured at an external face thereof with a wrench gripping arrangement.

12. The dental abutment assembly according to claim 1, wherein the at least one slot (276) of the slots of the reconstruction element support (242) extends axially, parallel to an axis of the longitudinal head bore (282), imparting it a symmetrically segmented shape.

13. The dental abutment assembly according to claim 12, wherein the at least one slot (276) of the slots of the reconstruction element support (242) extends helically about the longitudinal axis of the reconstruction element support (242).

14. The dental abutment assembly according to claim 1, wherein the anchoring head portion (272) of the reconstruction element support (242) is configured with symmetrically disposed at least two slots.

15. The dental abutment assembly according to claim 1, wherein the anchoring head portion (272) of the reconstruction element support (242) is configured with a cylindrical external cross-section.

16. The dental abutment assembly according to claim 1, wherein the anchoring head portion (272) of the reconstruction element support (242) is configured with a externally spherical or has a spherical portion, or a rounded portion cross-section.

17. The dental abutment assembly according to claim 1, wherein at least the anchoring head portion (272) of the reconstruction element support (242) is configured with surfacing for improved engagement with inside wall surface of the bore of a dental reconstruction element.

18. The dental abutment assembly according to claim 1, wherein a distal end of the axially extending through-going head bore (282) of the reconstruction element support (242) is configured with said inwardly tapering top section (284), configured for engagement with a radial annular projection of the manipulating fastener (286).

19. The dental abutment assembly according to claim 18, wherein the radial annular projection of the manipulating fastener (286) is cylindrical.

20. The dental abutment assembly according to claim 18, wherein the radial annular projection of the manipulating fastener (286) is tapering in direction of the tapering top section (284) of the reconstruction element support (242).

21. The dental abutment assembly according to claim 1, wherein a resilient sealing member is disposed between a distal end of the bore of the dental reconstruction element (242) mountable thereover, and an external surface of the abutment body (241).

## Patentansprüche

1. Eine Zahnabutmentanordnung (240) zur Befestigung eines Zahnersatzelements (212) an einem Zahnimplantat (216), wobei das Zahnersatzelement (212) eine Bohrung (214) aufweist und das Zahnimplantat (216) ein Außengewinde (218) umfasst, das in eine Kavität eines Kieferknochens eingesetzt wird, und eine Abutmentaufnahmebohrung (222) mit einem polygonalen Kopfsockel (223) umfasst, wobei die Zahnabutmentanordnung (240) einen zylindrischen Abutmentkörper (241), eine rohrförmige Stütze für das Zahnersatzelement (242) und eine Manipulationsscheibe (201) umfasst;
wobei der Abutmentkörper (241) einen rohrförmigen Ansatz (271) umfasst, der sich von einem flachen Stützflächenende (267) nach oben erstreckt und sich entlang einer ersten Achse (X1) erstreckt und mit einer durchgehenden Abutmentbohrung (246) entlang einer zweiten Achse (X2) versehen ist, die mit einem distalen Bodenende mit einem polygonalen Ansatz (250) konfiguriert ist, der in den polygonalen Kopfsockel (223) des Zahnabutments (216) eingesetzt wird, um den Abutmentkörper (241) entlang der genannten zweiten Achse (X2) mit dem Zahnimplantat (216) zu koppeln,
wobei sich die erste Achse (X1) und die zweite Achse (X2) in einer gedachten Ebene in einem Winkel (α) schneiden, wobei der Winkel (α) zwischen der ersten Achse (X1) und der zweiten Achse (X2) etwa 3° bis 8° beträgt, typischerweise etwa 5°;
wobei die Stütze für das Zahnersatzelement (242) einen proximalen Ankerkopfabschnitt (272) aufweist, der mit mindestens einem Schlitz (276) versehen ist, und ein distales flaches Sitzende (270), das bündig an das flache Stützflächenende (267) des Abutmentkörpers (241) anliegt, wobei die genannte Stütze für das Zahnersatzelement (242) ferner mit einer axial verlaufenden, durchgehenden Kopfbohrung (282) mit einem sich nach innen verjüngenden oberen Abschnitt (284) versehen ist,
wobei die Manipulationsscheibe (201) mit einer flachen Oberseite (202) und einer sich verjüngenden Seitenwand (204) konfiguriert ist,
wobei die Manipulationsscheibe (201) in den sich verjüngenden Abschnitt (284) der Stütze für das Zahnersatzelement (242) einführbar ist und die Stütze für das Zahnersatzelement (242) an den Abutmentkörper (241) mit einem Manipulationsbefestiger (286) koppelbar ist, der sich durch die durchgehende Kopfbohrung (282) erstreckt und bündig gegen die flache Oberseite (202) der Manipulationsscheibe (201) anliegt, um die Stütze für das Zahnersatzelement (242) am Abutmentkörper (241) zu befestigen und eine axial gerichtete Kraft auf die Manipulationsscheibe (201) auszuüben, die zu nach außen gerichteten Radialkräften führt, die auf den sich nach innen verjüngenden oberen Abschnitt (284) der Stütze für das Zahnersatzelement (242) abzielen, was bewirkt, dass sich der Ankerkopfabschnitt (272) ausdehnt und sich gegen die innere Wandfläche der Bohrung (214) des Zahnersatzelements (212) festzieht.

2. Die Zahnabutmentanordnung nach Anspruch 1, wobei die genannte durchgehende Abutmentbohrung (246) des Abutmentkörpers (241) mit einer inneren Befestigungsschulter (258) konfiguriert ist, wobei der Abutmentkörper (241) mit dem Zahnimplantat (216) durch einen Implantatbefestiger (262) koppelbar ist, der sich durch die durchgehende Abutmentbohrung (246) des Abutmentkörpers (241) erstreckt.

3. Die Zahnabutmentanordnung nach Anspruch 1, wobei der Manipulationsbefestiger (286) in ein Innengewinde (263) geschraubt werden kann, das in einem Implantatbefestiger (262) konfiguriert ist.

4. Das Zahnabutment nach Anspruch 1, wobei der Manipulationsbefestiger (286) in ein Innengewinde (263) geschraubt wird, das im rohrförmigen Ansatz (271) des Abutmentkörpers (241) konfiguriert ist.

5. Die Zahnabutmentanordnung nach Anspruch 1, wobei der mindestens eine Schlitz (276) des proximalen Ankerkopfabschnitts (272) der Stütze für das Zahnersatzelement (242) sich vom proximalen Ankerkopfabschnitt (272) in Richtung des distalen flachen Sitzendes (270) der Stütze für das Zahnersatzelement (242) erstreckt.

6. Die Zahnabutmentanordnung nach Anspruch 1, wobei der polygonale Ansatz (250) des Abutmentkörpers (241) in diskreten Winkelschritten in der polygonalen Kopfbuchse (223) des Zahnimplantats (216) koppelbar ist, wobei sich der genannte polygonale Ansatz (250) entlang der genannten zweiten Achse (X2) erstreckt.

7. Die Zahnabutmentanordnung nach Anspruch 1, wobei der Abutmentkörper (241) direkt oder indirekt mit dem Zahnimplantat (216) koppelbar ist, mit einem dazwischen angeordneten Zwischenadapter-Sitzelement, wobei das Sitzelement einen Körper mit einer durchgehenden Bohrung aufweist, die sich zwischen einem Abutmentende, das einen externen Kopfabschnitt des Zahnimplantats (216) nachbildet, und einem Implantatende erstreckt, das zur Auflage über einem inneren Kopfabschnitt des Zahnimplantats (216) konfiguriert ist.

8. Die Zahnabutmentanordnung nach Anspruch 7, wobei das Adapter-Sitzelement integral oder integriert mit dem Abutmentkörper ist.

9. Die Zahnabutmentanordnung nach Anspruch 1, wobei ein Ende des Zahnimplantats des Abutmentkörpers (241) zur direkten Auflage über einem externen zylindrischen Kopfabschnitt des Zahnimplantats (216) oder über einem Adapter-Sitzelement konfiguriert ist, das sich zwischen dem Abutmentkörper (241) und dem Zahnimplantat (216) erstreckt.

10. Die Zahnabutmentanordnung nach Anspruch 1, wobei ein Ende des Zahnimplantats des Abutmentkörpers (241) zylindrisch ist und zur zumindest teilweisen Einführung in ein offenes Ende des Zahnimplantats (216) konfiguriert ist.

11. Die Zahnabutmentanordnung nach Anspruch 1, wobei ein Teil des Abutmentkörpers (241) an seiner Außenfläche mit einer Greifanordnung für einen Schraubenschlüssel konfiguriert ist.

12. Die Zahnabutmentanordnung nach Anspruch 1, wobei der mindestens eine Schlitz (276) der Schlitze der Stütze für das Zahnersatzelement (242) axial verläuft, parallel zu einer Achse der Längskopfbohrung (282), wodurch eine symmetrisch segmentierte Form entsteht.

13. Die Zahnabutmentanordnung nach Anspruch 12, wobei sich der mindestens eine Schlitz (276) der Schlitze der Stütze für das Zahnersatzelement (242) spiralig um die Längsachse der Stütze für das Zahnersatzelement (242) erstreckt.

14. Die Zahnabutmentanordnung nach Anspruch 1, wobei der Ankerkopfabschnitt (272) der Stütze für das Zahnersatzelement (242) mit symmetrisch angeordneten mindestens zwei Schlitzen konfiguriert ist.

15. Die Zahnabutmentanordnung nach Anspruch 1, wobei der Ankerkopfabschnitt (272) der Stütze für das Zahnersatzelement (242) mit einem zylindrischen Außenquerschnitt konfiguriert ist.

16. Die Zahnabutmentanordnung nach Anspruch 1, wobei der Ankerkopfabschnitt (272) der Stütze für das Zahnersatzelement (242) mit einem kugelförmigen oder einem kugelförmigen Abschnitt oder einem abgerundeten Querschnitt konfiguriert ist.

17. Die Zahnabutmentanordnung nach Anspruch 1, wobei mindestens der Ankerkopfabschnitt (272) der Stütze für das Zahnersatzelement (242) mit einer Oberfläche zur verbesserten Verbindung mit der Innenwandfläche der Bohrung eines Zahnersatzelements konfiguriert ist.

18. Die Zahnabutmentanordnung nach Anspruch 1, wobei ein distales Ende der axial verlaufenden durchgehenden Kopfbohrung (282) der Stütze für das Zahnersatzelement (242) mit dem genannten nach innen verjüngenden oberen Abschnitt (284) konfiguriert ist, der zur Verbindung mit einer radialen ringförmigen Projektion des Manipulationsbefestigers (286) konfiguriert ist.

19. Die Zahnabutmentanordnung nach Anspruch 18, wobei die radiale ringförmige Projektion des Manipulationsbefestigers (286) zylindrisch ist.

20. Die Zahnabutmentanordnung nach Anspruch 18, wobei die radiale ringförmige Projektion des Manipulationsbefestigers (286) sich in Richtung des sich verjüngenden oberen Abschnitts (284) der Stütze für das Zahnersatzelement (242) verjüngt.

21. Die Zahnabutmentanordnung nach Anspruch 1, wobei ein elastisches Dichtelement zwischen einem distalen Ende der Bohrung des Zahnersatzelements (242), das darüber montierbar ist, und einer Außenfläche des Abutmentkörpers (241) angeordnet ist.

## Revendications

1. Un ensemble de pilier dentaire (240) pour fixer un élément de reconstruction dentaire (212) à un implant dentaire (216), où l'élément de reconstruction dentaire (212) comporte un alésage (214) et l'implant dentaire (216) comprend un filetage externe (218) pour s'adapter dans une cavité d'un os maxillaire et un alésage recevant un pilier (222) avec une douille de tête polygonale (223), l'ensemble de pilier dentaire (240) comprenant un corps de pilier cylindrique (241), un support tubulaire pour élément de reconstruction (242) et un disque de manipulation (201);
dans lequel le corps du pilier (241) comprend un bossage tubulaire (271), projetant vers le haut depuis une extrémité de surface de support plane (267) et s'étendant le long d'un premier axe (X1), et est pourvu d'un alésage de pilier traversant (246) le long d'un deuxième axe (X2) configuré avec une extrémité inférieure distale avec un bossage polygonal (250) configuré pour être inséré dans la douille de tête polygonale (223) de l'implant dentaire (216) pour coupler le corps du pilier (241) à l'implant dentaire (216) le long dudit deuxième axe (X2),
dans lequel le premier axe (X1) et le deuxième axe (X2) s'intersectent approximativement dans un plan imaginaire avec un angle (α), l'angle (α) entre le premier axe (X1) et le deuxième axe (X2) étant d'environ 3° à 8°, typiquement environ 5°;
dans lequel le support d'élément de reconstruction (242) a une portion de tête d'ancrage proximale (272) configurée avec au moins une fente (276), et une extrémité inférieure plane de siège distale (270) en appui à plat contre l'extrémité de surface de support plane (267) du corps du pilier (241), ledit support d'élément de reconstruction (242) étant en outre configuré avec un alésage de tête traversant s'étendant axialement (282) avec une section supérieure conique interne (284),
dans lequel le disque de manipulation (201) est configuré avec une surface supérieure plane (202) et une paroi latérale conique (204),
le disque de manipulation (201) étant insérable dans la section conique (284) du support d'élément de reconstruction (242) et le support d'élément de reconstruction (242) pouvant être couplé au corps du pilier (241) par un dispositif de fixation de manipulation (286) s'étendant à travers l'alésage de tête traversant (282) et en appui à plat contre la surface supérieure plane (202) du disque de manipulation (201) pour fixer le support d'élément de reconstruction (242) au corps du pilier (241) et pour appliquer une force dirigée axialement au disque de manipulation (201), qui donne lieu à des forces radiales dirigées vers l'extérieur, dirigées vers la section supérieure conique interne (284) du support de l'élément de reconstruction (242), provoquant l'expansion et le serrage de la portion de tête d'ancrage (272) contre la surface interne de l'alésage (214) de l'élément de reconstruction dentaire (212).

2. L'ensemble de pilier dentaire selon la revendication 1, dans lequel ledit alésage de pilier traversant (246) du corps de pilier (241) est configuré avec un épaulement interne de fixation (258), permettant de coupler le corps du pilier (241) à l'implant dentaire (216) à l'aide d'un dispositif de fixation d'implant (262) s'étendant à travers l'alésage de pilier traversant (246) du corps de pilier (241).

3. L'ensemble de pilier dentaire selon la revendication 1, dans lequel le dispositif de fixation de manipulation (286) peut être vissé dans un filetage interne (263) configuré dans un dispositif de fixation d'implant (262).

4. L'ensemble de pilier dentaire selon la revendication 1, dans lequel le dispositif de fixation de manipulation (286) est vissé dans un filetage interne (263) configuré dans le bossage tubulaire (271) du corps de pilier (241).

5. L'ensemble de pilier dentaire selon la revendication 1, dans lequel l'au moins une fente (276) de la portion de tête d'ancrage proximale (272) du support d'élément de reconstruction (242) s'étend de la portion de tête d'ancrage proximale (272) vers l'extrémité inférieure plane de siège distale (270) du support d'élément de reconstruction (242).

6. L'ensemble de pilier dentaire selon la revendication 1, dans lequel le bossage polygonal (250) du corps de pilier (241) est couplable à des incréments angulaires discrets dans la douille de tête polygonale (223) de l'implant dentaire (216), ledit bossage polygonal (250) s'étendant le long dudit deuxième axe (X2).

7. L'ensemble de pilier dentaire selon la revendication 1, dans lequel le corps du pilier (241) est couplable à l'implant dentaire (216) directement ou indirectement, avec un élément de siège adaptateur intermédiaire disposé entre eux, dans lequel l'élément de siège adaptateur a un corps avec un alésage traversant s'étendant entre une extrémité de pilier imitant une partie de tête externe de l'implant dentaire (216) et une extrémité d'implant configurée pour s'appuyer sur une partie de tête interne de l'implant dentaire (216).

8. L'ensemble de pilier dentaire selon la revendication 7, dans lequel l'élément de siège adaptateur est intégré ou fait partie intégrante du corps de pilier.

9. L'ensemble de pilier dentaire selon la revendication 1, dans lequel une extrémité d'implant dentaire du corps de pilier (241) est configurée pour s'appuyer directement sur une partie de tête cylindrique externe de l'implant dentaire (216) ou sur un élément de siège adaptateur s'étendant entre le corps de pilier (241) et l'implant dentaire (216).

10. L'ensemble de pilier dentaire selon la revendication 1, dans lequel une extrémité d'implant dentaire du corps de pilier (241) est cylindrique et est configurée pour être au moins partiellement insérée dans une extrémité ouverte de l'implant dentaire (216).

11. L'ensemble de pilier dentaire selon la revendication 1, dans lequel une partie du corps du pilier (241) est configurée avec un dispositif de préhension pour clé sur une face externe.

12. L'ensemble de pilier dentaire selon la revendication 1, dans lequel l'au moins une fente (276) des fentes du support d'élément de reconstruction (242) s'étend axialement, parallèlement à un axe de l'alésage de tête longitudinal (282), lui conférant une forme segmentée symétriquement.

13. L'ensemble de pilier dentaire selon la revendication 12, dans lequel l'au moins une fente (276) des fentes du support d'élément de reconstruction (242) s'étend hélicoïdalement autour de l'axe longitudinal du support d'élément de reconstruction (242).

14. L'ensemble de pilier dentaire selon la revendication 1, dans lequel la portion de tête d'ancrage (272) du support d'élément de reconstruction (242) est configurée avec au moins deux fentes symétriquement disposées.

15. L'ensemble de pilier dentaire selon la revendication 1, dans lequel la portion de tête d'ancrage (272) du support d'élément de reconstruction (242) est configurée avec une section transversale externe cylindrique.

16. L'ensemble de pilier dentaire selon la revendication 1, dans lequel la portion de tête d'ancrage (272) du support d'élément de reconstruction (242) est configurée avec une section transversale externe sphérique ou comporte une portion sphérique ou arrondie.

17. L'ensemble de pilier dentaire selon la revendication 1, dans lequel au moins la portion de tête d'ancrage (272) du support d'élément de reconstruction (242) est configurée avec une surface pour améliorer l'engagement avec la surface interne de l'alésage d'un élément de reconstruction dentaire.

18. L'ensemble de pilier dentaire selon la revendication 1, dans lequel une extrémité distale de l'alésage de tête traversant s'étendant axialement (282) du support d'élément de reconstruction (242) est configurée avec ladite section supérieure conique interne (284), configurée pour un engagement avec une projection annulaire radiale du dispositif de fixation de manipulation (286).

19. L'ensemble de pilier dentaire selon la revendication 18, dans lequel la projection annulaire radiale du dispositif de fixation de manipulation (286) est cylindrique.

20. L'ensemble de pilier dentaire selon la revendication 18, dans lequel la projection annulaire radiale du dispositif de fixation de manipulation (286) est conique en direction de la section supérieure conique (284) du support d'élément de reconstruction (242).

21. L'ensemble de pilier dentaire selon la revendication 1, dans lequel un élément d'étanchéité élastique est disposé entre une extrémité distale de l'alésage de l'élément de reconstruction dentaire (242) montable dessus, et une surface externe du corps de pilier (241).
